# EUROPEAN PATENT APPLICATION

(11) **EP 2 362 517 A2**
(43) Date of publication of application: **31.08.2011**
(21) Application number: 11000753.1
(22) Date of filing: 31.01.2011
(51) Int. Cl.: H02J 3/32

(54) **Power storage system**

(30) Priority: 26.02.2010 JP 2010043236; 22.06.2010 JP 2010141652
(71) Applicant: Sanyo Electric Co., Ltd., Osaka 570-8677 (JP)
(72) Inventor: Uehashi, Hiroyuki, Osaka 570-8677 (JP); Kubo, Mamoru, Osaka 570-8677 (JP)
(74) Representative: Glawe, Delfs, Moll

(57) **Abstract**

An electric power storage system includes: a solar battery(10), a solar-battery DC/AC converter(20) converting the DC power of the solar battery into AC power at a prescribed frequency and supplying it to AC wiring(31), a battery(70), a charger(60) charging the battery using one of DC power and DC power obtained by rectifying AC power of AC wiring, and a storage-battery DC/AC converter(90) converting the DC power of the battery into AC power and supplying it to the AC wiring. The solar-battery DC/AC converter working under MPPT control such that power generated by the solar battery approaches a maximum output. The storage-battery DC/AC converter working or controlled such that power supplied to the load through the AC wiring and an amount of conversion into AC power of the storage-battery does not fall below a preset value.

## Description

### TECHNICAL FIELD

The present invention relates to a electric power storage system, and more particularly to a power storage system configured to include a storage battery and a DC/AC converter, for example.

### BACKGROUND ART

A electric power system of this kind supplies electric power to a load by superimposing power generated by a solar battery or a storage battery, on AC wiring receiving power from a grid commercial power system. The supply of generated power or charged power can reduce consumption of electric power supplied from the grid and decrease the maximum value of electric power supplied from the grid.

In this case, a DC/AC converter (inverter) is provided between a solar battery or battery, and a power system supplying AC (alternating current) power to convert DC (direct current) power generated by the solar cell or the battery into AC power at the same frequency as the power system. The converted AC power is then superimposed on home AC wiring (see JP-A-6-266458).

On the other hand, electric power generated by a solar battery varies with the amount of sunlight. A power conditioner is known which includes a DC/DC circuit provided at a stage before a DC/AC converter (inverter) for a solar battery to boost voltage. The values of step-up voltage and current are adjusted during voltage boosting such that power generated by the solar battery is maximized (see JP-A-2002-354677).

The techniques disclosed in JP-A-6-266458 and JP-A-2002-354677 employ a single DC/AC converter (inverter) to convert power generated by a solar battery or a battery into AC power to be supplied to a power line from the grid.

Therefore, when the power generated by a solar battery and the power charged in a battery are converted at the same time by a single DC/AC converter, one of the power generation efficiency and the discharging efficiency precedes the other, and the power generation efficiency as a whole is compromised.

### SUMMARY

An advantage of some aspects of the present invention is to provide a power storage system capable of efficiently converting direct current from a solar battery and from a battery into alternating current.

Some aspects of the invention are configured as follows.
(1) According to an aspect of the invention, a electric power storage system includes: a solar battery, a solar-battery DC/AC converter converting DC power generated by the solar battery into AC power at a prescribed frequency and supplying the converted AC power to AC wiring connected with a load, a battery, a charger charging the battery using one of DC power and DC power obtained by rectifying AC power supplied through the AC wiring, and a storage-battery DC/AC converter converting the DC power charged in the battery into AC power and supplying the converted AC power to the AC wiring. The solar-battery DC/AC converter working under maximum power point tracking (MPPT) control such that power generated by the solar battery approaches a maximum output. The storage-battery DC/AC converter working such that power supplied to the load through the AC wiring does not fall below a preset value or is controlled such that an amount of conversion into AC power of the storage-battery does not fall below a preset value. Working or an amount of conversion into AC power of the storage-battery DC/AC converter is controlled such that power supplied to the load through the AC wiring does not fall below a preset value.
(2) In the electric power storage system, it is preferable that the charger charges the battery using DC power generated by the solar battery.
(3) It is preferable that the electric power storage system further includes a detector detecting power supplied from the AC wiring to the load. Working of the storage-battery DC/AC converter is stopped and the charger is worked upon detection, by the detector, of the power falling below a prescribed value or power supplied from the solar-battery DC/AC converter to the AC wiring.
(4) It is preferable that the electric power storage system further includes a detector detecting power supplied from the home AC wiring to the load. The solar-battery DC/AC converter and of the storage-battery DC/AC converter are stopped and DC power supplied from a DC portion of the solar-battery DC/AC converter is supplied to the charger to charge the battery upon detection, by the detector, of the power falling below a prescribed value or power supplied from the solar-battery DC/AC converter to the AC wiring.
(5) In the electric power storage system, it is preferable that the DC portion of the solar-battery DC/AC converter is configured to output DC power controlled at a prescribed voltage, and the battery is charged with the output DC power.
(6) According to another aspect of the invention, a electric power storage system includes: a storage-battery DC/AC converter converting charging power of a battery into AC power and supplying the converted AC power to AC wiring supplied with AC power at a prescribed frequency obtained by converting DC power generated by a solar battery, and a charger charging the battery using one of DC power and DC power obtained by rectifying AC power supplied through the AC wiring. The storage-battery DC/AC converter is operated such that power supplied to the load through the AC wiring does not fall below a preset value or is controlled such that an amount of conversion into AC power of the storage-battery does not fall below a preset value.

A electric power storage system according to some aspects of the invention can efficiently convert direct current from a solar battery and from a battery into alternating current.

### BRIEF DESCRIPTION OF THE DRAWINGS

The invention will be described with reference to the accompanying drawings.
Fig. 1 is an overall diagram schematically showing a power storage system according to a first embodiment of the invention.
Fig. 2 is a circuit diagram showing an embodiment of an internal configuration of a solar-battery DC/AC converter shown in Fig. 1.
Fig. 3 is an operational flowchart showing the relation between charging and MPPT control in the power storage system according to the invention.
Fig. 4 is an operational flowchart showing charging of a battery and discharging from a solar battery to home AC wiring in the power storage system according to the invention.
Fig. 5 illustrates a power storage system according to a second embodiment of the invention.
Fig. 6 is a diagram showing an example where the configuration in Fig. 5 is not applied, in order to clarify an effect of the invention.
Fig. 7 is a diagram showing another example where the configuration in Fig. 5 is not applied, in order to clarify an effect of the invention.
Fig. 8 shows an improvement of the configuration shown in Fig. 5.
Fig. 9 is an operational flowchart of a control portion shown in Fig. 8.

### DESCRIPTION OF EXEMPLARY EMBODIMENTS

In the following, suitable embodiments of a power storage system according to the invention will be described in detail with reference to the drawings. In the figures, the same components are denoted with the same reference numerals.

### First Embodiment

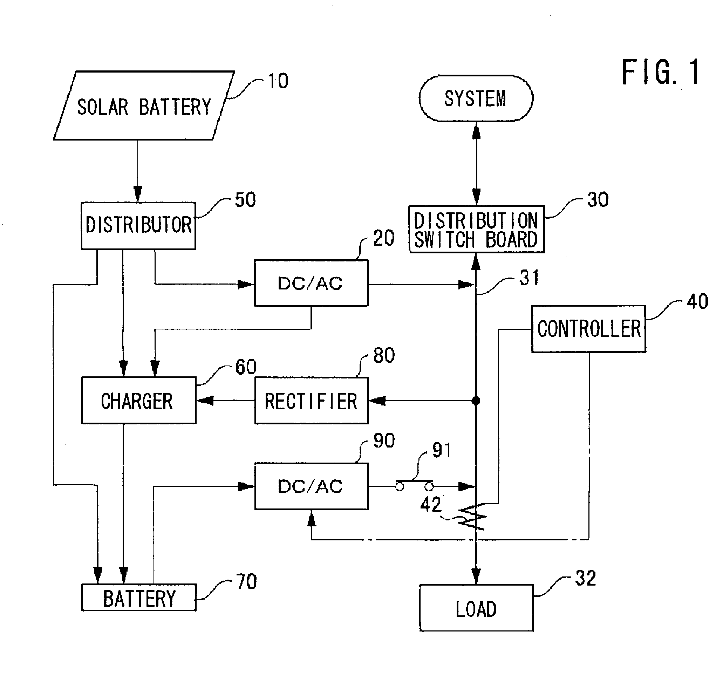

First, Fig. 1 is a schematic diagram showing a power storage system of the invention as a whole. In the figure, a solar battery 10 is configured to include a plurality of solar battery cells connected in series.

Electric power (DC power) generated by the solar battery 10 is supplied to a distributor 50 and then selectively supplied to a solar-battery DC/AC converter 20 (referred to as a power conditioner) or a charger 60. The solar-battery DC/AC converter 20 converts DC power into AC power at a prescribed frequency and thereafter superimposes the converted power on AC wiring 31. The AC wiring 31 is connected to a grid through a distribution switchboard 30 having a current breaker. The prescribed frequency is a frequency of the grid(50 Hz or 60 Hz).
A load 32 of, for example, a television, an air conditioner, or a refrigerator is connected to the AC wiring 31. In the figure, a controller 40, which is a part of a not shown control unit, has a function of detecting AC supplied to the load 32 using a detector (for example, current transformer) 42 to calculate power consumption as well as voltage.

The solar-battery DC/AC converter 20, which will be detailed later, has a function of performing maximum power point tracking (MPPT) control to adjust voltage boosted by a DC/DC converter such that output by the solar battery 10 is maximized.

Power generated by the solar battery 10 to be supplied to the charger 60 through the distributor 50 is stored in a battery 70. The charger 60 is formed of, for example, a DC/DC converter to increase or decrease the voltage output from the solar battery 10. The battery 70 is formed of, for example, a lead-acid battery, a lithium battery, or any other battery.
For example, a lithium battery is charged by constant controlled current when the terminal voltage of the battery is a prescribed voltage or lower, while it is charged by constant controlled voltage when it is higher than a prescribed voltage. The charging is stopped when it is determined that the terminal voltage reaches a voltage corresponding to a target charged capacity.

AC power from the AC wiring 31 is rectified into DC power through a rectifier 80 and is then supplied to the charger 60 to charge the battery 70 similarly as above. Thus, the battery 70 can also be charged from the AC wiring 31, as necessary. In other words, the charger 60 can charge the battery 70 either with DC power from the solar battery 10 or DC power obtained by rectifying AC from the AC wiring 31.

Furthermore, DC power from the battery 70 is converted into AC power through a storage-battery DC/AC converter 90 and is then supplied to the AC wiring 31 through a switch 91. Similarly to the solar-battery DC/AC converter 20, after DC power is converted into AC power at a prescribed frequency, the AC power is superimposed on the AC wiring 31. The prescribed frequency is also a frequency of the power system.
Output from the detector 42 is input to the storage-battery DC/AC converter 90 through the controller 40. A signal for controlling the operation of the storage-battery DC/AC converter 90 is output such that power consumption of the load 32, which is obtained based on current detected by the detector 42, does not exceed output power of the storage-battery DC/AC converter 90. Accordingly, reverse power flow caused by output from the battery 70 is prevented.
The storage-battery DC/AC converter 90 may have a configuration similar to that of the solar-battery DC/AC converter 20 or may have a configuration different therefrom. It should be noted that the storage-battery DC/AC converter 90 is configured independently from the solar-battery DC/AC converter 20. In other words, the control of the storage-battery DC/AC converter 90 and the control of the solar-battery DC/AC converter 20 are performed independently from each other by the not-shown control unit. Accordingly, power conversion in the solar-battery DC/AC converter 20 can be performed efficiently in accordance with the solar-battery DC/AC converter 20 while power conversion in the storage-battery DC/AC converter 90 can be performed efficiently in accordance with voltage of the battery 70.

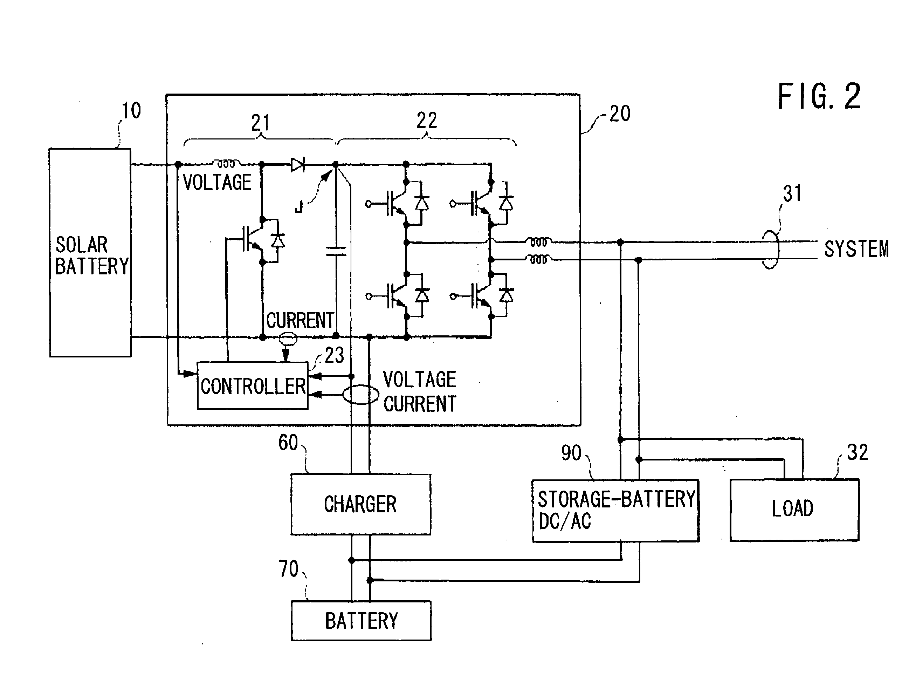

Fig. 2 is a circuit diagram showing a detailed internal configuration of the solar-battery DC/AC converter 20. Fig. 2 also shows the connection of the solar-battery DC/AC converter 20 with the solar battery 10, the charger 60, the battery 70, the storage-battery DC/AC converter 90, and the load 32. The distributor 50 and its connection, the controller 40, and the like are not shown.
As shown in Fig. 2, the solar-battery DC/ACconverter 20 includes a DC/DC converter (step-up circuit) 21 connected to the solar battery 10 and an inverter circuit 22 connected to the AC wiring 31. The DC/DC converter 21 is a generally known PWM-type step-up circuit which mainly includes a reactance, a diode, a capacitor, and a switch element, and controls voltage at a node J to a target value by changing ON duty of the switch element. A detailed description of the DC/DC converter 21 is not repeated here.
Voltage and current of the solar battery 10 are input to and monitored by a controller 23. The controller 23 calculates the generated power of the solar battery 10 based on the input voltage and current and changes ON duty of the switch element such that the generated power is maximized. In other words, the controller 23 performs MPPT control. Here, the MPPT control is control for efficiently drawing out the maximum power in accordance with the generated power from the solar battery 10. In the output voltage to output current characteristics of the solar battery 10, output current is constant before output voltage reaches a prescribed value, and then changes abruptly when output voltage becomes higher than the prescribed voltage. Furthermore, the generated power of the solar battery 10 is changed under the influence of the amount of sunlight. Such inconvenience is eliminated by the above-noted MPPT control.

The inverter circuit 22 is formed of a single-phase full-bridge circuit to which a reactor (filter) is connected. Each arm of the full bridge includes switch elements and diodes connected in parallel. The diode portion forms the rectifier 80 (Fig. 1). The inverter circuit 22 converts DC power boosted by the DC/DC circuit 21 into AC power, a Pulse Width Modulation (PWM) signal is supplied to allow four transistors included in the full-bridge circuit to output a pseudo sinusoidal wave. The output power and frequency of the inverter circuit 22 is thus adjusted. This control is also performed by the not-shown control unit.

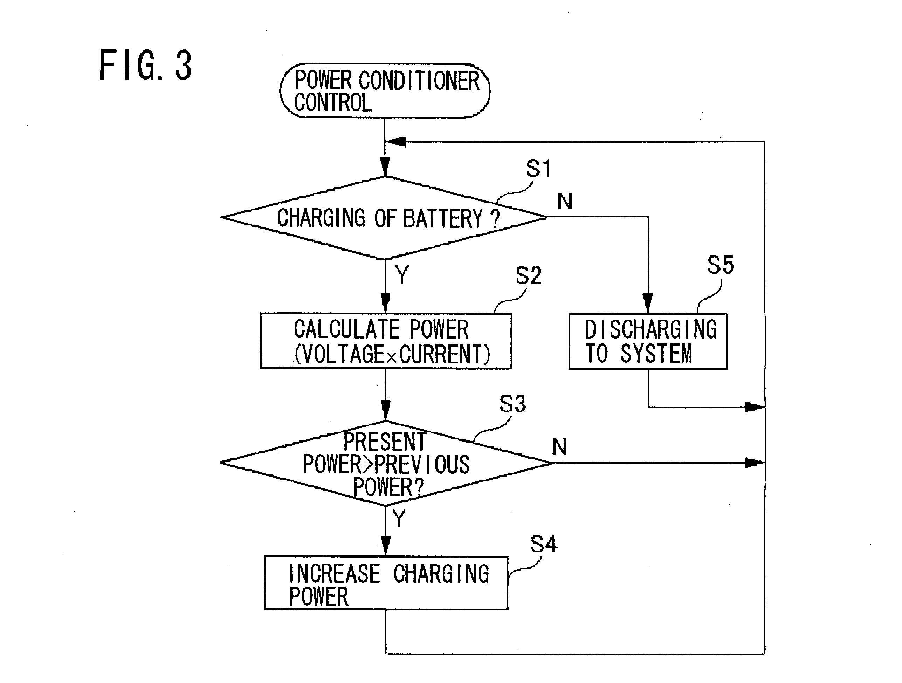

In this embodiment, as is clear from Fig. 2, DC power from the DC portion of the solar-battery DC/AC converter 20 is charged in the battery 70 through the charger 60. Fig. 3 is an operational flowchart showing the relation between charging and the MPPT control in this case.

In Fig. 3, first, as shown in step S1, it is determined whether the battery 70 is being charged with DC power from the DC portion of the solar-battery DC/AC converter 20. If it is charged, as shown in step S2, the controller 23 detects voltage and current from the DC portion of the solar-battery DC/AC converter and calculates DC power (voltagexcurrent). If the battery 70 is not being charged, the process proceeds to step S5, and power from the solar battery 10 is discharged to the AC wiring 31.
Then, as shown in step S3, it is determined whether the present DC power is larger than the previous DC power. If the present DC power is larger than the previous DC power, as shown in step S4, the step-up voltage of the DC/DC circuit 21 is driven so that it increases by the controller 23. If the present DC power is not larger than the previous DC power, in step S6, the step-up voltage of the DC/DC circuit 21 is driven so that it decreases. The process then returns to step S1, and the operation is repeated.

Returning to Fig. 1, the storage-battery DC/AC converter 90 has a configuration, for example, similar to that of the solar-battery DC/AC converter 20. However, the invention is not limited thereto, and the storage-battery DC/AC converter 90 may have any other configuration. It should be noted that the control of the storage-battery DC/AC converter 90 and the control of the solar-battery DC/AC converter 20 are performed independently from each other by the not-shown control unit, as described above. In this case, the operation or the amount of conversion of the storage-battery DC/AC converter 90 is controlled such that current flowing from the AC wiring 31 to the load 32 does not exceed a preset value. The storage-battery DC/AC converter 90 is controlled as described above based on output from the detector 42 through the controller 40.
Such control prevents reverse power flow of excessive power to the power system when AC power superimposed on the AC wiring 31 from the storage-battery DC/AC converter 90 exceeds power consumption of the load 32.

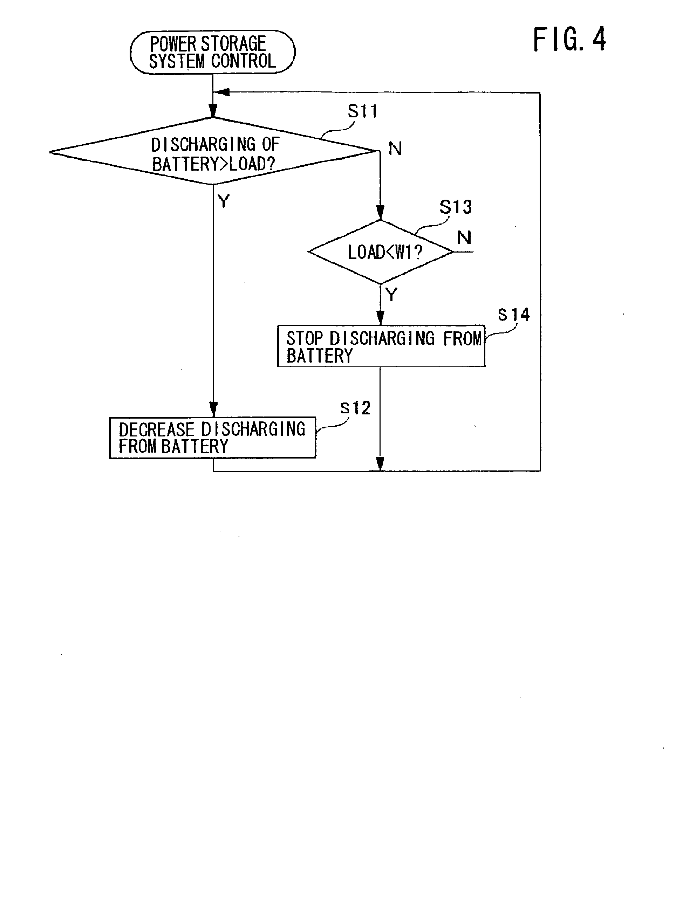

Fig. 4 is an operational flowchart showing charging of the battery 70 and discharging from the battery 70 to the AC wiring 31 in the electric power storage system configured as described above.

In Fig. 4, first, as shown in step S11, electric power from the battery 70 is compared with AC power supplied to the load 32. Here, the power from the battery 70 is, for example, power from the storage-battery DC/AC converter 90 to be supplied to the AC wiring 31, and the AC power supplied to the load 32 is, for example, power detected by the detector 42. Then, if the AC power supplied to the load 32 is below the power from the battery 70, as shown in step S12, the amount discharged from the battery 70 is reduced. For example, the amount discharged is reduced by decreasing the voltage of the pseudo sinusoidal wave by changing the PWM signal in the inverter circuit. If the AC power supplied to the load 32 is not below the power from the battery 70, the process proceeds to step S13 below.
In step S13, the AC power supplied to the load 32 is compared with a constant value W1. Here, W1 is the substantially minimum amount discharged in consideration of the efficiency of discharging from the battery 70. If the AC power supplied to the load 32 is below the constant value W1, as shown in step S14, discharging from the battery 70 is stopped.
Discharging continues if the AC power supplied to the load 32 is not below W1. Thereafter, the process returns to step S11, and the above-noted operation is repeated.

The electric power storage system configured in this manner has the separate solar-battery DC/AC converter 20 and storage-battery DC/AC converter 90, which are controlled independently from each other. Therefore, direct current from the solar battery and from the battery can efficiently be converted into alternating current.

### Second Embodiment

In the first embodiment, when DC power from the solar battery 10 is charged in the battery 70, DC power can be taken from the DC portion of the solar-battery DC/AC converter 20. This DC power is charged in the battery 70 through the charger 60, as shown in Fig. 1 and Fig. 2.

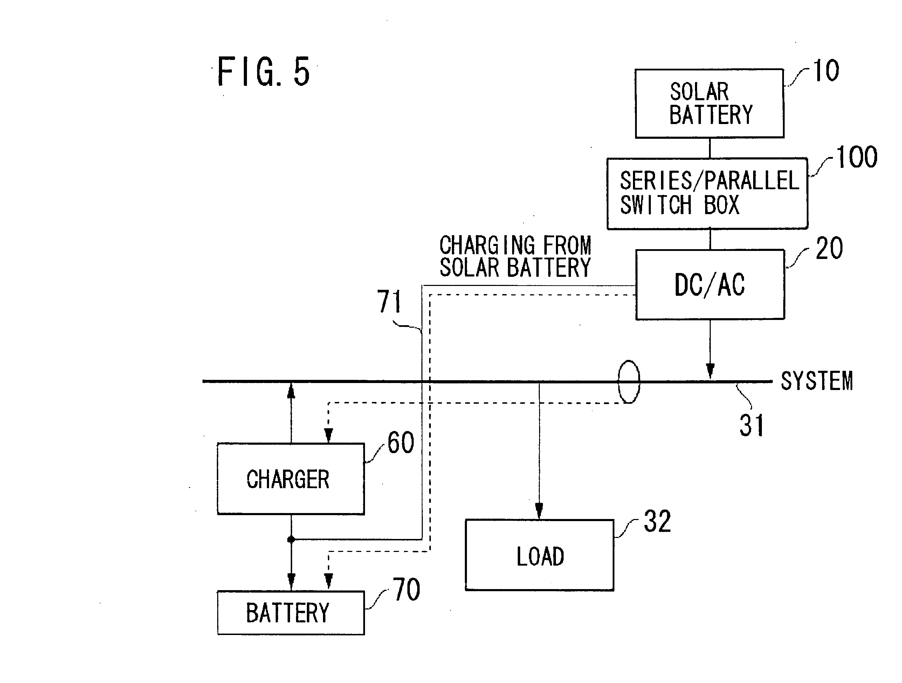

However, as shown in Fig. 5, DC power from the DC portion of the solar-battery DC/AC converter 20 may be charged in the battery 70 without passing through the charger 60 (by bypassing the charger 60) under certain conditions. In this case, a circuit for directly charging the battery 70 from the DC portion of the solar-battery DC/AC converter 20 is referred to as a bypass circuit 71 here. It is noted that Fig. 5 only shows the solar battery 10, the solar-battery DC/AC converter 20, the charger 60, the battery 70, and the load 32, excerpted from Fig. 1. In the configuration shown in Fig. 5, a series/parallel switch BOX 100, not shown in Fig. 1, is arranged. However, the series/parallel switch BOX 100 may not be included.

Although not clearly shown in Fig. 5, DC voltage is taken from the DC portion of the solar-battery DC/AC converter 20.

The electric power storage system configured in this manner can reduce loss by the solar-battery DC/AC converter 20 and conversion loss by the charger 60, and thus can save power consumption in the system in which the battery 70 is charged from the solar battery 10.

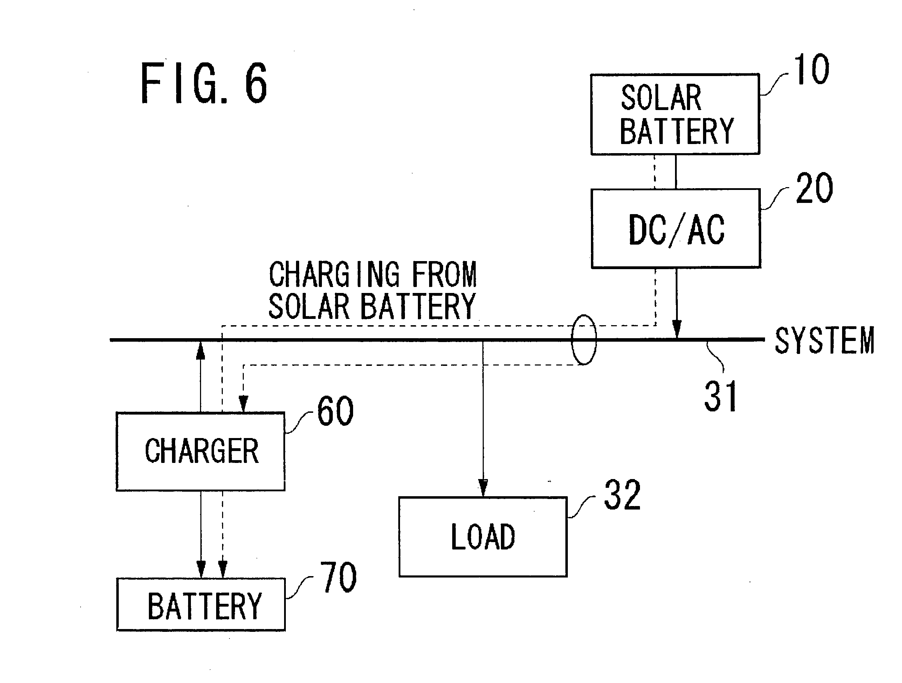

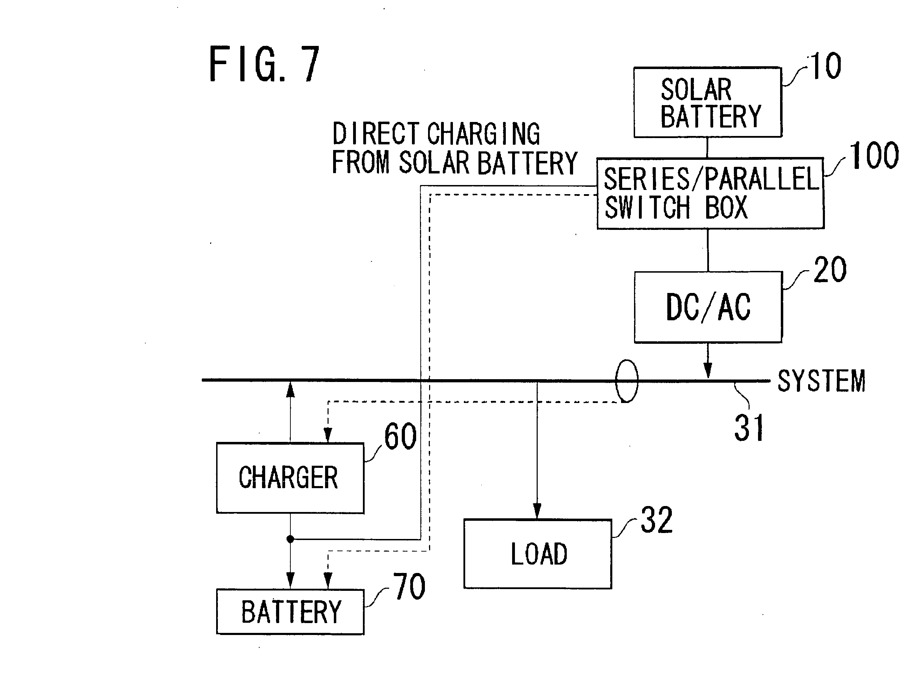

Fig. 6 illustrates that power from the solar battery 10 is charged in the battery 70 through the solar-battery DC/AC converter 20 and the charger 60, in association with Fig. 5. In this case, power from the solar battery to be charged in the battery 70 inevitably suffers considerable conversion loss through the solar-battery DC/AC converter 20 and the charger 60. Fig. 7 shows a configuration in which power from the solar battery 10 is taken from the output side of the series/parallel switch BOX 100 and input to the battery 70 such that charging is performed without passing through the solar-battery DC/AC converter 20 and the charger 60, with the intention of avoiding conversion loss. However, in this configuration, inconveniently, power charged in the battery 70 is not that obtained from the solar battery 10 at the maximum power point.

As is clear from the comparison of the configurations in Fig. 6 and Fig. 7, the configuration shown in Fig. 5 can reduce the conversion loss of power to be charged in the battery 70 and can operate at the maximum power point.

In Fig. 5, the not-shown control unit increases the efficiency of the charging of the battery 70 in the following manner. Specifically, when output voltage of the solar battery 10 is equal to or higher than the terminal voltage of the battery module by a prescribed value and is equal to or lower than the full-charging voltage of the battery module, the bypass circuit 71 directly couples the solar battery 10 to the battery 70 in order to charge the battery 70.
On the other hand, when the output voltage of the solar battery 10 is equal to or is lower than the voltage of the battery module by a prescribed value or is higher than the full-charging voltage of the battery module, the battery 70 is charged through the charger 60 without passing through the bypass circuit 71. Here, the solar battery 10, formed of battery modules including a plurality of battery cells connected in series, is configured to detect voltage across each battery cell and to detect, at least, overvoltage of the battery cells, overcharging, the temperature of the battery module, and charging/discharging current of the battery module. In this case, the full-charging voltage can be determined from the charging voltage of DC power applied to the battery module from the outside.

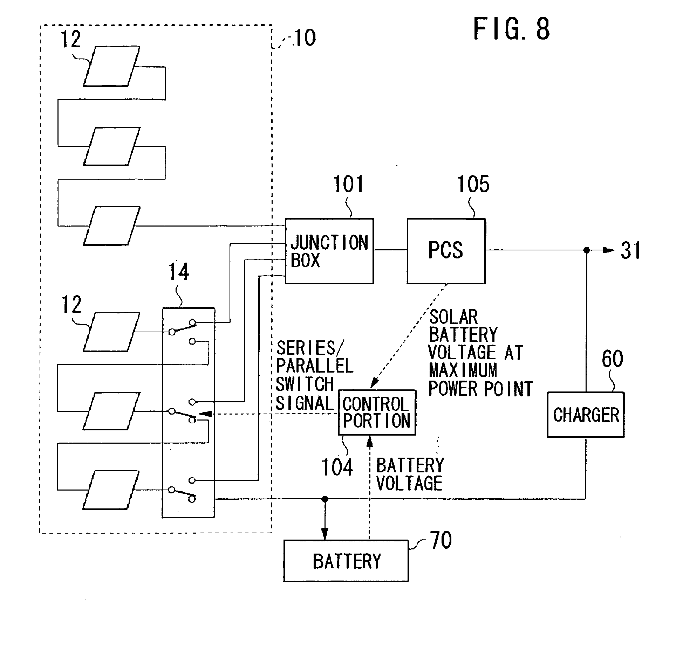

Fig. 8 shows a configuration that allows efficient charging using the maximum power point in the solar-battery DC/AC converter 20 and the voltage of the battery 70 when the solar battery 10 is directly coupled to the battery 70 to directly charge the battery 70 in the configuration shown in Fig. 5.

In Fig. 8, the solar battery 10 is formed of a plurality of battery cells 12, some of which (the battery cells shown in the upper portion in the figure) are connected in series to supply power to a junction box 101. The other battery cells (the battery cells shown in the lower portion in the figure) supply power to the junction box 101 through switches 14. Each of switches 14 is turned on and off by a signal from a control portion 104 as described later, so that any given number (n) of battery cells 12 can be connected in series. Power from any given number of battery cells 12 connected in series is directly charged in the battery 70.

The junction box 101 is connected with the AC wiring 31 through a PCS controller 105. Here, the PCS controller 105 outputs power of the solar battery 10 in connection with power on the AC wiring 31 at a prescribed rate, to the AC wiring 31. The PCS controller 105 is configured to contain the aforementioned solar-battery DC/AC converter 20. It is noted that AC power from the AC wiring 31 is charged in the battery 70 through the charger 60.

The control portion 104, which is a part of the not-shown control unit in Fig. 1, can detect the maximum power point in the solar-battery DC/AC converter 20 in the PCS controller 105 and the voltage of the battery 70. The control portion 104 then calculates based on the maximum power point of the solar-battery DC/AC converter 20 and the voltage of the battery 70 and controls on/off of each of the switches 14 based on the calculation result. In this manner, the voltage to be charged in the battery 70 is set depending on the number of the battery cells 12.

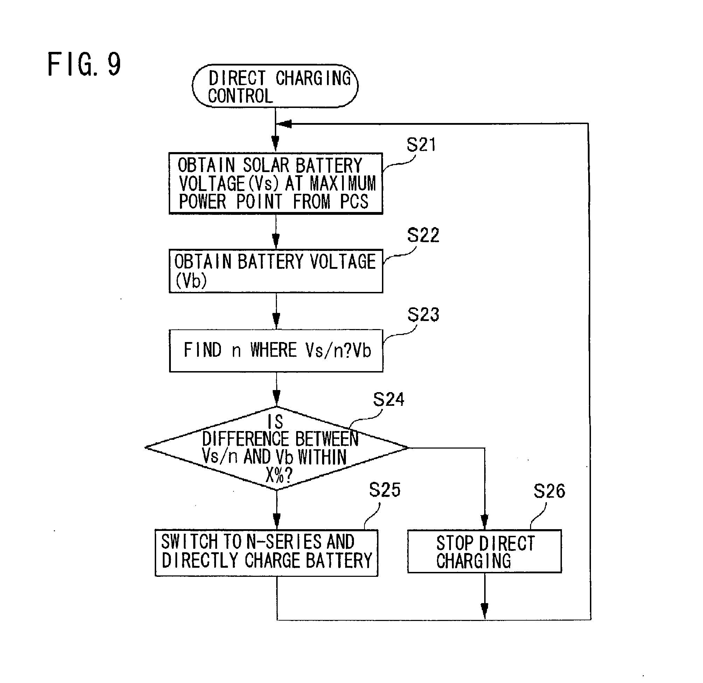

Fig. 9 is a flowchart showing the operation in the control portion 104. In Fig. 9, the control portion 104 first detects voltage Vs at the maximum power point of the voltage of the solar battery 10, from the PCS controller 105, as shown in step S21. Then, as shown in step S22, the voltage Vb of the battery 70 is detected. Then, the control portion 104 calculates n that approximately satisfies Vs/n=Vb, based on the detected voltage Vs and Vb, as shown in step S23. Then, the control portion 104 determines whether the difference between Vs/n and Vb is within X%, as shown in step S24. X is a predetermined value set depending on whether efficient charging is performed or not. Then, if the difference between Vs/n and Vb is within X%, n battery cells 12 of the solar battery 10 are connected in series (n series), and the battery 70 is directly charged by n series connected battery cells 12, as shown in step S25. Thereafter, the control portion 104 returns to step S21 and repeats the operation. If the difference between Vs/n and Vb is not within X% in step S24, direct charging of the battery 70 from the solar battery 10 is stopped as shown in step S26. Thereafter, the control portion 104 returns to step S21 and repeats the operation.

In this configuration, the charger 60 may not be provided.

In the electric power storage system configured as above, when power from the solar battery 10 is charged in the battery 70, the battery 70 is directly charged without passing through the charger 60 under certain conditions. Accordingly, conversion loss by the charger 60 can be reduced and power consumption can be saved.

Although the preferred embodiments of the invention have been detailed above, the invention is not limited to the embodiments, and various modifications and changes can be made without departing from the scope of the invention set forth in the appended claims.

## Claims

1. A electric power storage system comprising:
a solar battery(10);
a solar-battery DC/AC converter(20) converting DC power generated by the solar battery into AC power at a prescribed frequency and supplying the converted AC power to AC wiring(31) connected with a load(32);
a battery(70);
a charger(60) charging the battery using one of DC power and DC power obtained by rectifying AC power supplied through the AC wiring; and
a storage battery DC/AC converter(90) converting the DC power charged in the battery into AC power and supplying the converted AC power to the AC wiring;
the solar-battery DC/AC converter working under maximum power point tracking (MPPT) control such that power generated by the solar battery approaches a maximum output, and
the storage-battery DC/AC converter working such that power supplied to the load through the AC wiring does not fall below a preset value or being controlled such that an amount of conversion into AC power of the storage-battery does not fall below a preset value.

2. The electric power storage system according to claim 1, wherein the charger charges the battery using DC power generated by the solar battery.

3. The electric power storage system according to claim 1 or 2, further comprising:
a detector(42) detecting power supplied from the AC wiring to the load, wherein
working of the storage-battery DC/AC converter is stopped and the charger is worked upon detection, by the detector, of the power falling below a prescribed value or power supplied from the solar-battery DC/AC converter to the AC wiring.

4. The electric power storage system according to claim 3, wherein the solar-battery DC/AC converter and the storage-battery DC/AC converter are stopped and DC power supplied from a DC portion(21) of the solar-battery DC/AC converter is supplied to the charger to charge the battery upon detection, by the detector, of the power falling below a prescribed value or power supplied from the solar-battery DC/AC converter to the AC wiring.

5. The electric power storage system according to claim 4, wherein the DC portion of the solar-battery DC/AC converter is configured to output DC power controlled at a prescribed voltage, and the battery is charged with the output DC power.

6. A electric power storage system comprising:
a storage-battery DC/AC converter(90) converting charging power of a battery(70) into AC power and supplying the converted AC power to AC wiring(31) supplied with AC power at a prescribed frequency obtained by converting DC power generated by a solar battery(10); and
a charger(60) charging the battery using one of DC power and DC power obtained by rectifying AC power supplied through the home AC wiring;
the storage-battery DC/AC converter being operated such that power supplied to the load through the AC wiring does not fall below a preset value or being controlled such that an amount of conversion into AC power of the battery does not fall below a preset value.
